# EUROPÄISCHE PATENTSCHRIFT

(11) **EP 2 768 342 B1**
(45) Veröffentlichungstag und Bekanntmachung des Hinweises auf die Patenterteilung: **22.07.2015**
(21) Anmeldenummer: 12775425.7
(22) Anmeldetag: 07.09.2012
(51) Int. Cl.: A47B 88/00

(54) **ANORDNUNG MIT EINER VERBINDUNGSVORRICHTUNG ZUM VERBINDEN ZWEIER RECHTWINKLIG ANZUORDNENDER SCHUBLADENWANDTEILE**
ARRANGEMENT WITH A CONNECTING APPARATUS FOR CONNECTING TWO DRAWER WALL PARTS WHICH ARE ARRANGED AT A RIGHT ANGLE
AGENCEMENT AVEC UN DISPOSITIF D'ASSEMBLAGE POUR CONNECTER DEUX ÉLÉMENTS DE PAROI DE TIROIR DISPOSES À ANGLE DROIT

(30) Priorität: 17.10.2011 AT 15132011
(43) Veröffentlichungstag der Anmeldung: 27.08.2014
(73) Patentinhaber: Julius Blum GmbH, 6973 Höchst (AT)
(72) Erfinder: GASSER, Ingo, A-6973 Höchst (AT)
(74) Vertreter: Torggler, Paul Norbert
(86) Internationale Anmeldenummer: PCT/AT2012/000231
(87) Internationale Veröffentlichungsnummer: WO 2013/056282

(56) Entgegenhaltungen:
- DE-U1-202009 002 242
- DE-U1-202009 004 982

## Beschreibung

Die vorliegende Erfindung bezieht sich auf eine Anordnung mit wenigstens zwei rechtwinklig anzuordnenden Schubladenwandteilen, die über eine Verbindungsvorrichtung miteinander verbunden oder miteinander verbindbar sind. Ferner betrifft die Erfindung eine Schublade mit einer Rückwand, einer Frontwand und zwei Seitenwänden, wobei zumindest zwei dieser Wände mit einer Verbindungsvorrichtung der zu beschreibenden Art miteinander verbindbar oder miteinander verbunden sind.

>

Derartige Verbindungsvorrichtungen werden für den Zusammenbau von Schubladenwandteilen verwendet, wobei insbesondere vorgesehen ist, dass ein erstes Schubladenwandteil als dekorativer, plattenförmiger Einsatz - beispielsweise aus Glas, Kunststoff, Holz, Stein oder Keramik ausgebildet ist, der über die Verbindungsvorrichtung mit einer Profilwand aus Metall oder Kunststoff zu verbinden ist. Generell ist es wünschenswert, wenn die Montage bzw. Demontage der Schubladenwandteile einfach durchzuführen ist und auf komplexe Bauteile der Verbindungsvorrichtung verzichtet werden kann. Das manuelle Zusammenfügen bzw. die Trennung von verbundenen Schubladenwandteilen soll auch ohne die Verwendung eines Werkzeuges erfolgen können.

Aufgabe der vorliegenden Erfindung ist, eine Anordnung mit einer Verbindungsvorrichtung der eingangs erwähnten Gattung vorzuschlagen, welche den oben genannten Erfordernissen Genüge leistet.

Dies wird erfindungsgemäß durch die Merkmale des Patentanspruchs 1 gelöst. Vorteilhafte Ausgestaltungen der Erfindung sind in den Unteransprüchen angegeben. In der DE 20200900498241 ist eine Anordnung gemäß dem Oberbegriff des Anspruchs 1 offenbart.

Die erfindungsgemäße Anordnung mit einer Verbindungsvorrichtung zum Verbinden zweier rechtwinklig anzuordnender Schubladenwandteile weist die Kombination folgender Merkmale auf:
- zumindest ein Aufnahmeteil, welches eine Aufnahmeöffnung zur Aufnahme eines Endabschnittes des ersten Schubladenwandteiles und wenigstens eine Einschiebeöffnung aufweist,
- eine Klammer, welche zumindest zwei im Wesentlichen parallel verlaufende Schenkel aufweist, wobei die Klammer zum Verbinden der beiden Schubladenwandteile auf einen am zweiten Schubladenwandteil angeordneten oder ausgebildeten Steg aufschiebbar ist und wobei die beiden Schenkel der Klammer den Steg des zweiten Schubladenwandteiles umgreifen, wobei ein erster Schenkel der Klammer in die Einschiebeöffnung des Aufnahmeteiles einschiebbar ist und den Aufnahmeteil lagesicher mit dem zweiten Schubladenwandteil verbindet.

Mit anderen Worten ist ein Aufnahmeteil mit einer Aufnahmeöffnung vorgesehen, in die ein Endabschnitt des ersten Schubladenwandteiles einsteckbar ist. Die U-förmig ausgebildete Klammer mit den wenigstens zwei parallel verlaufenden Schenkeln dient zur Befestigung des Aufnahmeteiles am zweiten Schubladenwandteil, wobei bei der Montage ein Schenkel der Klammer in die vorgesehene Einstecköffnung des Aufnahmeteiles einzustecken ist und wobei die beiden Schenkel der Klammer gemeinsam einen Steg des zweiten Schubladenwandteiles umgreifen, sodass das Aufnahmeteil (und damit das erste Schubladenwandteil) kraftschlüssig und/oder formschlüssig relativ zum Steg des zweiten Schubladenwandteiles fixierbar ist.

Gemäß einem Ausführungsbeispiel der Erfindung kann vorgesehen sein, dass die Aufnahmeöffnung des Aufnahmeteiles als Einstecktasche ausbildet ist, welche in Montagelage den Endabschnitt des ersten Schubladenwandteiles im Wesentlichen vollständig umgreift. In diese Einstecktasche kann ein stirnseitiges Ende des ersten Schubladenwandteiles eingesteckt werden.

Um das Einstecken der Klammer in die Einstecköffnung des Aufnahmeteiles zu erleichtern kann vorgesehen sein, dass das Aufnahmeteil zumindest einen Einführtrichter aufweist, durch den ein Schenkel der Klammer in die Einschiebeöffnung des Aufnahmeteiles führbar ist. Der Einführtrichter kann hierfür zwei zumindest eine - vorzugsweise zwei zueinander konvergierende - Schrägflächen aufweisen, durch welche zumindest ein Schenkel der Klammer in Richtung der Einschiebeöffnung des Aufnahmeteiles führbar ist.

Das Aufnahmeteil und/oder die Klammer kann aus Kunststoff bestehen, wobei vorzugsweise vorgesehen ist, dass diese Bauteile als einstückig ausgebildete Spritzgussteile ausgeführt sind. Dies erlaubt eine problemlose und kostengünstige Herstellung des Aufnahmeteiles und/oder der Klammer.

Die erfindungsgemäße Schublade weist eine Rückwand, eine Frontblende und zwei Seitenwände auf, wobei zumindest zwei dieser Wände mit einer Verbindungsvorrichtung der in Rede stehenden Art miteinander verbunden sind. Die Rückwand, die Frontblende und/oder wenigstens eine Seitenwand kann ein als plattenförmigen Einsatz, vorzugsweise aus Glas, Kunststoff, Holz, Stein oder Keramik, ausgebildetes Schubladenwandteil aufweisen, wobei der plattenförmige Einsatz über die Verbindungsvorrichtung mit einer Profilwand, vorzugsweise aus Metall oder Kunststoff, verbunden ist.

Weitere Einzelheiten und Vorteile der vorliegenden Erfindung werden anhand des in den Zeichnungen dargestellten Ausführungsbeispieles erläutert. Dabei zeigt bzw. zeigen:
- Fig. 1: ein Möbel mit einem Möbelkorpus und verfahrbaren Schubladen in einer perspektivischen Darstellung,
- Fig. 2: eine Schublade in einer perspektivischen Ansicht,
- Fig. 3: die Schublade gemäß Fig. 2 mit einer Seite in einer Explosionsdarstellung,
- Fig. 4: der hintere Endbereich der Schublade in einer Explosionsdarstellung,
- Fig.5a, 5b: der hintere Endbereich der Schublade mit montiertem Schubladenwandteil sowie die Verbindungsvorrichtung in der das Schubladenwandteil haltenden Stellung im Querschnitt,
- Fig. 6a, 6b: die Klammer der Verbindungsvorrichtung in zwei verschiedenen Ansichten,
- Fig. 7a, 7b: den hinteren Endbereich der Schublade mit der aufzusteckenden Klammer sowie die Montagestellung der Klammer.

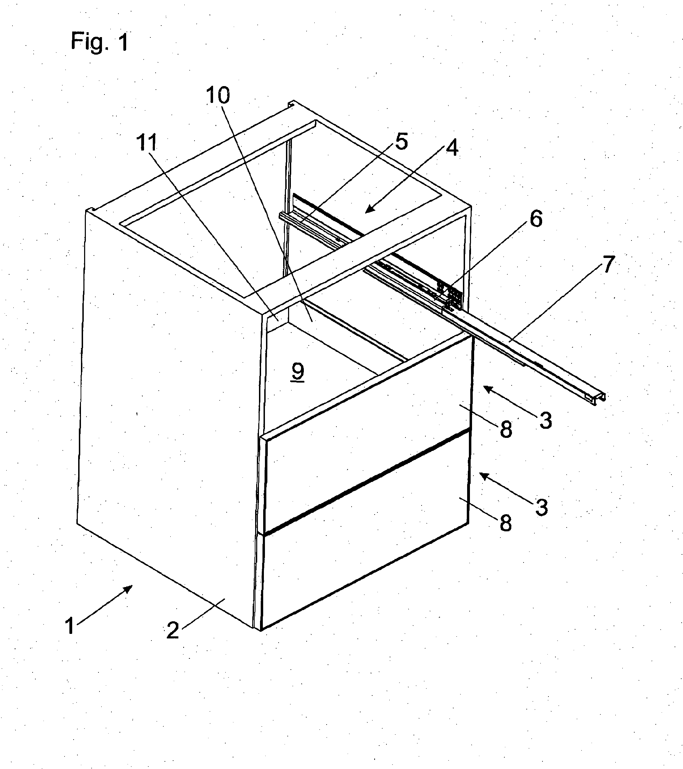

Fig. 1 zeigt ein Möbel 1 in einer perspektivischen Darstellung. Das Möbel 1 weist mehrere Schubladen 3 auf, welche über Schubladenausziehführungen 4 relativ zu einem schrankförmigen Möbelkorpus 2 verfahrbar gelagert sind. Die Schubladenausziehführung 4 weist in bekannter Weise eine am Möbelkorpus 2 zu befestigende Korpusschiene 5, eine an der Schublade 3 zu befestigende Ladenschiene 7 sowie eine zwischen der Korpusschiene 5 und der Ladenschiene 7 verfahrbar angeordnete Mittelschiene 6 auf. Die Schubladen 3 weisen jeweils eine Frontblende 8, einen Schubladenboden 9, Schubladenseitenwände 10 sowie eine Rückwand 11 auf.

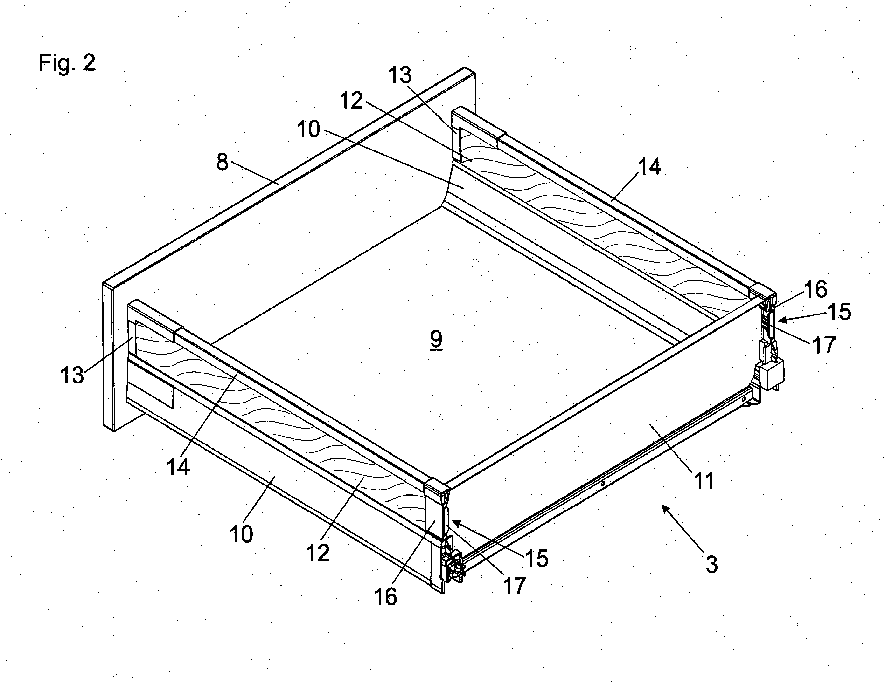

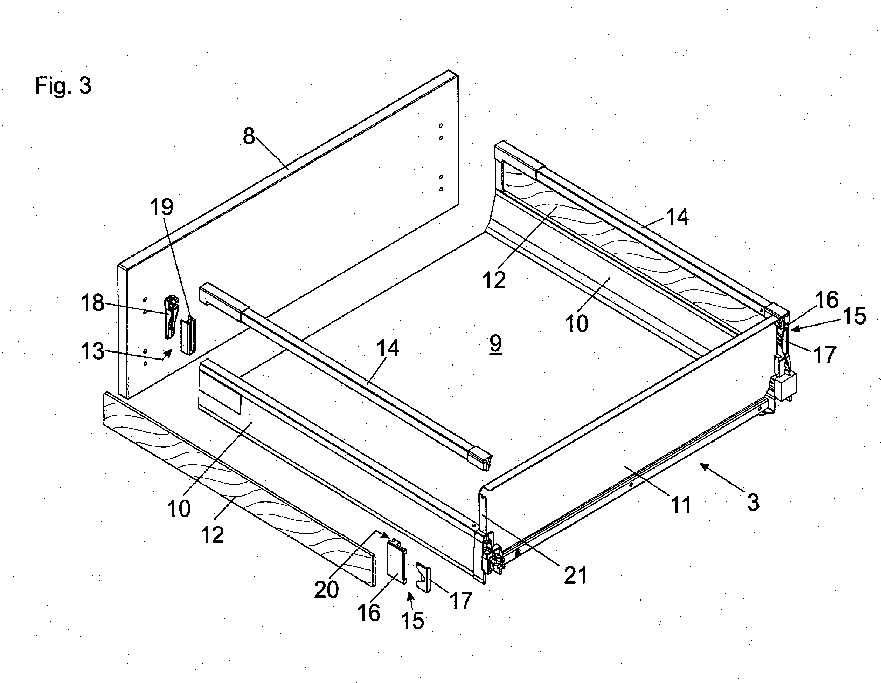

Fig. 2 zeigt eine Schublade 3 in einer perspektivischen Ansicht von hinten. Die Schublade 3 umfasst eine Frontblende 8, einen Schubladenböden 9, Seitenwände 10 sowie eine Rückwand 11. Oberhalb der Seitenwände 10 ist jeweils ein erstes Schubladenwandteil 12 angeordnet, welches beispielsweise als plattenförmiger Einsatz aus Glas, Holz, Metall, Kunststoff oder Keramik ausgebildet werden kann. Über den ersten Schubladenwandteilen 12 sind Relingstreben 14 angeordnet. An der Frontblende 8 ist ein Beschlagkörper 13 gelagert, der eine (hier nicht ersichtliche) Ausnehmung zur Aufnahme des frontseitigen Endabschnittes des ersten Schubladenwaridteiles 12 aufweist. Der rückseitige Endabschnitt des Schubladenwandteiles 12 ist hingegen über die Verbindungsvorrichtung 15 mit der Rückwand 11 verbunden, die im gezeigten Ausführungsbeispiel das zweite Schubladenwandteil bildet. Die Verbindungsvorrichtung 15 umfasst einen Aufnahmeteil 16 mit einer Aufnahmeöffnung 20 (Fig. 3), in welcher der rückseitige Endabschnitt des Schubladenwandteiles 12 eingesteckt ist. Die Befestigung des Aufnahmeteiles 16 relativ zur Rückwand 11 erfolgt über eine Klammer 17, welche in einer in Längsrichtung des Schubladenwandteiles 12 verlaufenden Richtung von hinten in das Aufnahmeteil 16 einsteckbar ist, wobei durch die Klammer 17 das Aufnahmeteil 16 relativ zur Rückwand 11 lagesicher fixierbar ist.

Fig. 3 zeigt die Schublade 3 in einer perspektivischen Ansicht, wobei eine Seite der Schublade 3 in einer Explosionsdarstellung gezeigt ist. An der Rückseite der Frontblende 8 ist ein Beschlagkörper 13 zu montieren, der den frontseitigen Endabschnitt des Schubladenwandteiles 12 aufnimmt und der gleichzeitig zur Befestigung des frontseitigen Endes der Relingstrebe 14 ausgebildet ist. In der gezeigten Figur ist der Beschlagkörper 13 zweiteilig ausgeführt und umfasst einen an der Frontblende 8 zu montierenden Befestigungsteil 18, auf den ein Halter 19 aufgeschnappt werden kann. Der Halter 19 weist eine taschenförmige Ausnehmung zur Aufnahme des frontseitigen Endabschnittes des ersten Schubladenwandteiles 12 auf. Die Seitenwände 10 der Schublade 3 sind als Hohlprofile, vorzugsweise aus Metall oder Kunststoff, ausgebildet. Die Verbindungsvorrichtung 15 umfasst einen Aufnahmeteil 16 mit einer in Montagelage senkrecht verlaufenden Aufnahmeöffnung 20 zur Aufnahme des rückseitigen Endabschnittes des Schubladenwandteiles 12. Über eine Klammer 17 kann das Aufnahmeteil 16 relative zu einem an der Rückwand 11 angeordneten oder ausgebildeten Steg 21 fixiert werden. Im gezeigten Ausführungsbeispiel ist die Rückwand 11 aus einer Profilwand aus Metall oder Kunststoff gebildet, wobei der Steg 21 von der Rückwand 11 rechtwinklig nach hinten absteht.

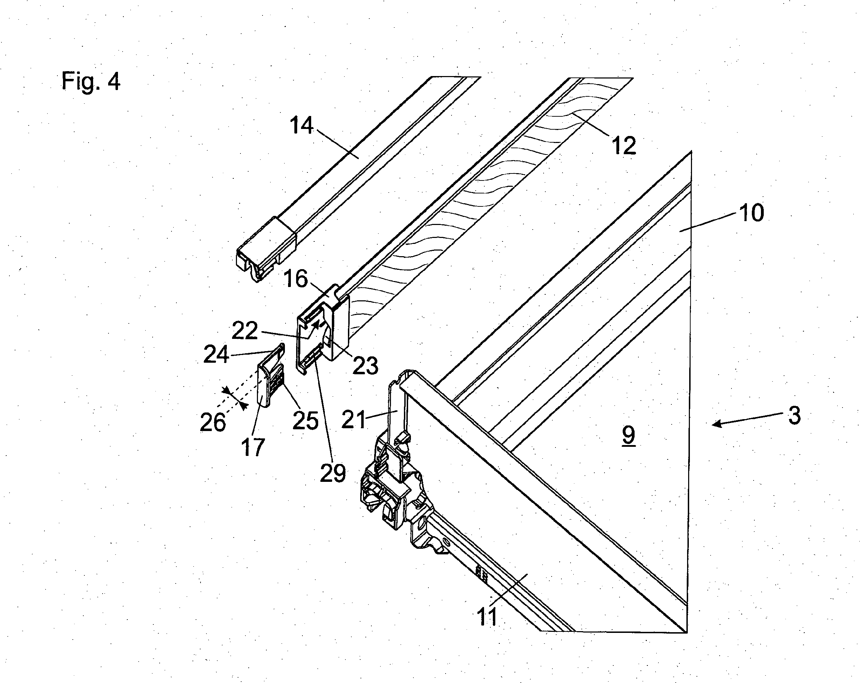

Fig. 4 zeigt den hinteren Endbereich der Schublade 3 in einer perspektivischen Ansicht von oben. Erkennbar ist die Schublade 3 mit dem Schubladenboden 9, der Seitenwand 3 sowie der Rückwand 11, von welcher der Steg 21 nach hinten abragt. Das Aufnahmeteil 16 wird auf das rückseitige Ende des Schubladenwandteiles 12 aufgesteckt, sodass das Schubladenwandteil 12 in der Aufnahmeöffnung 20 (Fig. 3) des Aufnahmeteiles 16 gehalten ist. Das Aufnahmeteil 16 ist mit einer federelastischen Zunge 23 versehen, die in Montagelage an einer Stirnseite des Schubladenwandteiles 12 anliegt, wobei durch die Zunge 23 beim Einschieben bzw. Herausziehen der Schublade 3 relativ zum Möbelkorpus 2 eine Längsverschiebung des Schubladenwandteiles 12 verhindert wird. Das Aufnahmeteil 16 umfasst ferner eine Einschiebeöffnung 22, die zur Aufnähme der Klammer 17 vorgesehen ist. Die Klammer 17 umfasst zwei voneinander beabstandete Schenkel 24, 25, zwischen denen ein Spalt 26 verbleibt. Der Schenkel 24 der Klammer 17 ist in die Einschiebeöffnung 22 des Aufnahmeteiles 12 einsteckbar, der andere Schenkel 25 der Klammer 17 liegt in Montagelage an der Innenseite des Steges 21 an, sodass der Steg 21 der Rückwand 11 im montierten Zustand in dem zwischen den Schenkeln 24, 25 gebildeten Spalt 26 aufgenommen ist. Um das Einführen der Klammer 17 zu erleichtern, ist ein Einführtrichter 29 mit wenigstens einer Schrägfläche vorgesehen, durch welche die Klammer 17 in die Einschiebeöffnung 22 des Aufnahmeteiles 16 führbar ist.

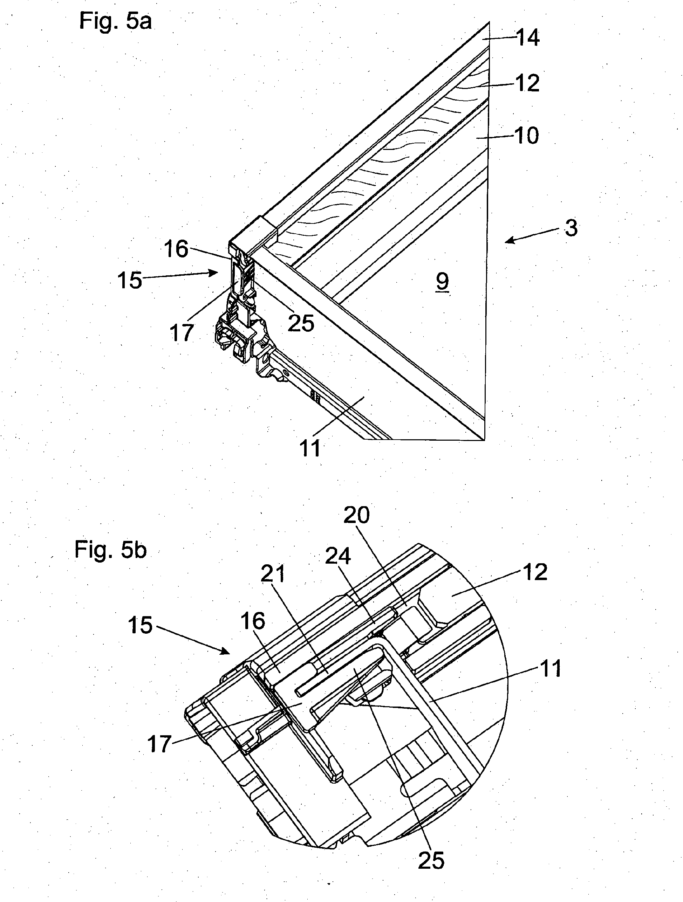

Fig. 5a zeigt den rückseitigen Endbereich der Schublade 3 in einer perspektivischen Ansicht von oben. Erkennbar ist die Montagestellung des Schubladenwandteiles 12, wobei ein Schenkel 24 (Fig. 4) der Klammer 17 in der Einschiebeöffnung 22 des Aufnahmeteiles 16 aufgenommen ist und wobei der andere Schenkel 25 der Klammer 17 an der Innenseite des Steges 21 der Rückwand 11 anliegt, sodass der Steg 21 zwischen den beiden Schenkeln 24, 25 der Klammer 17 gehalten ist.

Fig. 5b zeigt die Verbindungsvorrichtung 15 in der die Schubladenwand 12 haltenden Stellung im Querschnitt, wobei der hintere Endabschnitt des Schubladenwandteiles 12 in der Aufnahmeöffnung 20 des Aufnahmeteiles 16 gelagert ist. Ein Schenkel 24 der Klammer 17 ist im Aufnahmeteil 16 eingesteckt, der andere Schenkel 25 der Klammer 17 liegt am abgewinkelten Steg 21 der Rückwand 11 an, sodass der Steg 21 zwischen den beiden Schenkeln 24, 25 der Klammer 17 aufgenommen ist.

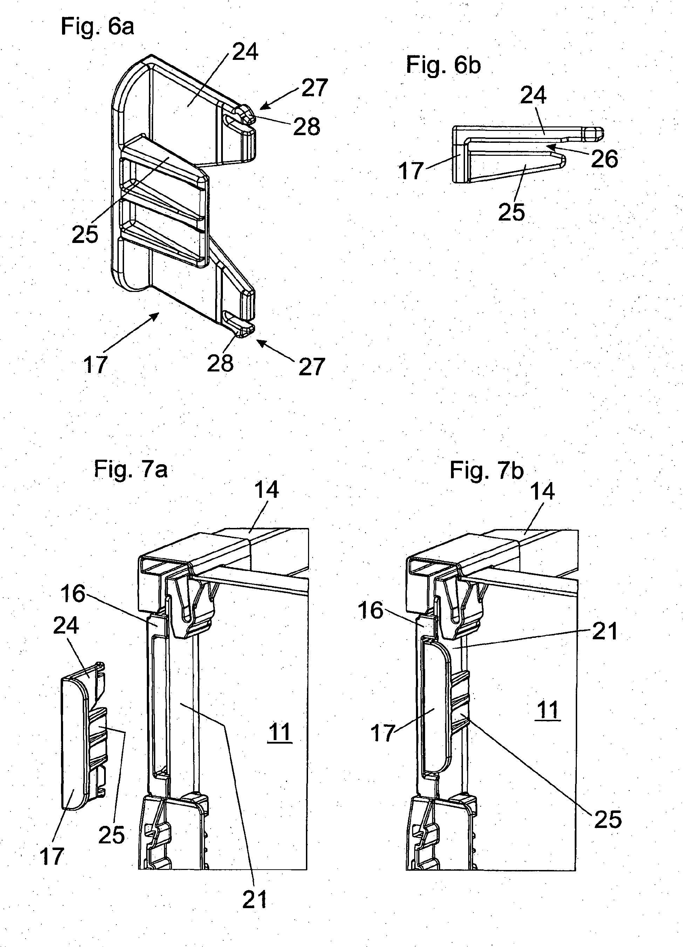

Fig. 6a zeigt die Klammer 17 in einer perspektivischen Ansicht, während Fig. 6b die Klammer 17 in einer Draufsicht zeigt. Die Klammer 17 weist zumindest zwei voneinander beabstandete Schenkel 24 und 25 auf, zwischen denen ein Spalt 26 verbleibt. In der gezeigten Figur weisen die Schenkel 24, 25 eine unterschiedliche Länge auf. Erkennbar ist eine Schnappverbindung 27 mit elastisch verbiegbaren Rastteilen 28, welche in der das Schubladenwandteil 12 haltenden Stellung mit einer vorgegebenen Befestigungsstelle des Aufnahmeteiles 16 lösbar verrastet sind. Durch die Rastelemente 28 kann ein unbeabsichtigtes Lösen der Klammer 17 relativ zum Aufnahmeteil 16 verhindert werden.

Fig. 7a und Fig. 7b zeigen den hinteren Endbereich der Schublade 3 mit der Klammer 17 in der gelösten Stellung sowie in der Montagestellung. Der Schenkel 24 wird in die Einschiebeöffnung 22 (Fig. 4) des Aufnahmeteiles 16 eingeschoben, der andere Schenkel 25 liegt in Montagestellung am Steg 21 der Rückwand 11 an.

Die vorliegende Erfindung beschränkt sich nicht auf das gezeigte Ausführungsbeispiel, sondern erfasst bzw. erstreckt sich auf alle Varianten und technischen Äquivalente, welche in die Reichweite der nachfolgenden Ansprüche fallen können. Auch sind die in der Beschreibung gewählten Lageangaben, wie z.B. oben, unten, seitlich, usw. auf die unmittelbar beschriebene bzw. dargestellte Figur bezogen und sind bei einer Lageänderung sinngemäß auf die neue Lage zu übertragen.

## Patentansprüche

1. Anordnung mit wenigstens zwei rechtwinklig zueinander anzuordnenden Schubladenwandteilen (12, 11) und mit einer Verbindungsvorrichtung (15) zum Verbinden der Schubladenwandteile (12, 11), wobei
- die Verbindungsvorrichtung (15) zumindest ein Aufnahmeteil (16) mit wenigstens einer Einschiebeöffnung (22) aufweist,
- die Verbindungsvorrichtung (15) eine Klammer (17) umfasst, welche zumindest zwei im Wesentlichen parallel verlaufende Schenkel (24, 25) aufweist, wobei ein erster Schenkel (24) der Klammer (17) in die Einschiebeöffnung (22) des Aufnahmeteiles (16) einschiebbar ist und den Aufnahmeteil (16) lagesicher mit dem zweiten Schubladenwandteil (11) verbindet,
**dadurch gekennzeichnet, dass** das Aufnahmeteil (16) eine Aufnahmeöffnung (20) zur Aufnahme eines Endabschnittes des ersten Schubladenteiles (12) aufweist und dass die Klammer (17) zum Verbinden der beiden Schubladenwandteile (12, 11) auf einen vom zweiten Schubladänwandteil (11) rechtwinklig abstehenden Steg (21) aufschiebbar ist, wobei die beiden Schenkel (24, 25) der Klammer (17) den Steg (21) des zweiten Schubladenwandteiles (11) umgreifen.

2. Anordnung nach Anspruch 1, **dadurch gekennzeichnet, dass** die Aufnahmeöffnung (20) des Aufnahmeteiles (16) als Einstecktasche ausbildet ist, welche in Montagelage den Endabschnitt des ersten Schubladenwandteiles (12) im Wesentlichen vollständig umgreift.

3. Anordnung nach Anspruch 1 oder 2, **dadurch gekennzeichnet, dass** das Aufnahmeteil (16) zumindest einen Einführtrichter (29) aufweist, durch den ein Schenkel (24) der Klammer (17) in die Einschlebeöffnung (22) des Aufnahmeteiles (16) führbar ist.

4. Anordnung nach Anspruch 3, **dadurch gekennzeichnet, dass** der Einführtrichter (29) zumindest eine am Aufnahmeteil (16) ausgebildete Schrägfläche aufweist, durch die wenigstens ein Schenkel (24) der Klammer (17) in Richtung der Einschiebeöffnung (22) des Aufnahmeteiles (16) führbar ist.

5. Anordnung nach einem der Ansprüche 1 bis 4, **dadurch gekennzeichnet, dass** das Aufnahmeteil (16) wenigstens eine federelastische Zunge (23) aufweist, welche in Montagelage an einer Stirnseite des ersten Schubladenwandteiles (12) anliegt.

6. Anordnung nach einem der Ansprüche 1 bis 5, **dadurch gekennzeichnet, dass** die Klammer (17) relativ zum Aufnahmeteil (16) über zumindest eine Schnappverbindung (27) lösbar verbindbar ist, wobei vorzugsweise vorgesehen ist, dass an der Klammer (17) wenigstens ein elastisch verbiegbares Rastteil (28) ausgebildet ist, welches an einer vorgegebenen Befestigungsstelle des Aufnahmeteiles (16) einschnappbar ist.

7. Anordnung nach einem der Ansprüche 1 bis 6, **dadurch gekennzeichnet, dass** das Aufnahmeteil (16) aus Kunststoff besteht, wobei vorzugsweise vorgesehen ist, dass das Aufnahmeteil (16) als einstückig ausgebildeter Spritzgussteil hergestellt ist.

8. Anordnung nach einem der Ansprüche 1 bis 7, **dadurch gekennzeichnet, dass** die Klammer (17) aus Kunststoff besteht, wobei vorzugsweise vorgesehen ist, dass die Klammer (17) als einstückig ausgebildeter Spritzgussteil hergestellt ist.

9. Schublade mit einer Anordnung nach einem der Ansprüche 1 bis 8.

10. Schublade nach Anspruch 9, **dadurch gekennzeichnet, dass** die Rückwand (11), die Frontblende (8) und/oder wenigstens eine Seitenwand (10) einen als plattenförmigen Einsatz, vorzugsweise aus Glas, Kunststoff, Holz, Stein oder Keramik, ausgebildeten Schubladenwandteil (12), aufweist oder aufweisen, wobei der plattenförmige Einsatz über die Verbindungsvorrichtung (15) mit einer Profilwand (11), vorzugsweise aus Metall oder Kunststoff, verbunden ist.

## Claims

1. An arrangement with at least two drawer wall parts (12, 11) to be connected at a right angle relative to each other and with a connecting apparatus (15) for connecting the drawer wall parts (12, 11), wherein
- the connection apparatus (15) includes at least one receiving portion (16) with at least one insertion opening (22),
- the connection apparatus (15) includes a clip (15) having at least two limbs (24, 25) extending substantially parallel, wherein a first limb (24) of the clip (15) can be pushed into the insertion opening (22) of the receiving portion (16) and which connects the receiving portion (16) to the second wall portion (11) in a secure position,
**characterized in that** the receiving portion (16) has a receiving opening (20) for receiving an end portion of the first drawer wall part (12), and the clip (17) for connecting the two drawer wall parts (12, 11) can be pushed onto a web (21) protruding at a right angle from the second drawer wall part (11), and wherein the two limbs (24, 25) of the clip (15) embrace the web (21) of the second drawer wall part (11).

2. The arrangement according to claim 1, **characterized in that** the receiving opening (20) of the receiving portion (16) is in the form of a push-in pocket which, in the assembled condition, substantially completely embraces the end portion of the first wall portion (12).

3. The arrangement according to claim 1 or 2, **characterized in that** the receiving portion (16) has at least one introduction funnel (29) by which a limb (24) of the clip (17) can be guided into the insertion opening (22) of the receiving portion (16).

4. The arrangement according to claim 3, **characterized in that** the introduction funnel (29) has at least one inclined surface which is provided on the receiving portion (16) and by which at least one limb (24) of the clip (17) can be guided in the direction of the insertion opening (22) of the receiving portion (16).

5. The arrangement according to one of the claims 1 to 4, **characterized in that** the receiving portion (16) has at least one resilient tongue (23) which, in the assembled condition, bears against a front face of the first drawer wall portion (12).

6. The arrangement according to one of the claims 1 to 5, **characterized in that** the clip (17) can be connected releasably relative to the receiving portion (16) by way of at least one snap connection (27), wherein it is preferably provided that on the clip (17) is at least one elastically bendable latching portion (28) which can be snap-engaged at a predetermined fixing location on the receiving portion (16).

7. The arrangement according to one of the claims 1 to 6, **characterized in that** the receiving portion (16) is made of plastic, wherein it is preferably provided that the receiving portion (16) is produced in the form of a one-piece injection molding member.

8. The arrangement according to one of the claims 1 to 7, **characterized in that** the clip (17) is made of plastic, wherein it is preferably provided that the clip (17) is produced in the form of a one-piece injection molding member.

9. A drawer with an arrangement according to one of the claims 1 to 8.

10. The drawer according to claim 9, **characterized in that** the rear wall (11), the front panel (8) and/or at least one side wall (10) has or have a drawer wall part (12) which is in the form of a plate-shaped insert, preferably of glass, plastic, wood, stone or ceramic, wherein the plate-shaped insert is connected by way of the connecting apparatus (15) to a profiled wall (11), preferably of metal or plastic.

## Revendications

1. Ensemble comportant au moins deux éléments de paroi de tiroir (12, 11) à disposer à angle droit l'un par rapport à l'autre et comportant un dispositif de liaison (15) permettant de relier lesdits éléments de paroi (12, 11),
- le dispositif de liaison (15) comportant au moins un élément de réception (16) avec au moins une ouverture d'introduction (22),
- le dispositif de liaison (15) comportant une pince (17) qui comporte au moins deux branches (24, 25) sensiblement parallèles, une première branche (24) de ladite pince (17) pouvant être insérée dans l'ouverture d'introduction (22) de l'élément de réception (16) et reliant l'élément de réception (16) de manière immobile en position avec le deuxième élément de paroi de tiroir (11),
**caractérisé en ce que** l'élément de réception (16) comporte une ouverture de réception (20) destinée à recevoir une extrémité du premier élément de paroi de tiroir (12) et **en ce que** la pince (17) pour relier les deux éléments de paroi de tiroir (12, 11) peut être enfilée sur une ailette (21) saillant à angle droit sur le deuxième élément de paroi de tiroir (11), les deux branches (24, 25) de la pince (17) enserrant l'ailette (21) du deuxième élément de paroi de tiroir (11).

2. Ensemble selon la revendication 1, **caractérisé en ce que** l'ouverture de réception (20) de l'élément de réception (16) est réalisée sous la forme d'une poche d'enfichage qui, dans la position de montage, enserre sensiblement totalement l'extrémité du premier élément de paroi de tiroir (12).

3. Ensemble selon la revendication 1 ou 2, **caractérisé en ce que** l'élément de réception (16) comporte au moins un cône d'introduction (29), à travers lequel une branche (24) de la pince (17) peut être guidée dans l'ouverture d'introduction (22) de l'élément de réception (16).

4. Ensemble selon la revendication 3, **caractérisé en ce que** le cône d'introduction (29) comporte au moins une surface inclinée, qui est réalisée sur l'élément de réception (16) et par laquelle au moins une branche (24) de la pince (17) peut être guidée vers l'ouverture d'introduction (22) de l'élément de réception (16).

5. Ensemble selon l'une quelconque des revendications 1 à 4, **caractérisé en ce que** l'élément de réception (16) comporte au moins une patte (23) flexible qui, dans la position de montage, est en appui contre une face frontale du premier élément de paroi de tiroir (12).

6. Ensemble selon l'une quelconque des revendications 1 à 5, **caractérisé en ce que** la pince (17) peut être reliée de manière amovible par rapport à l'élément de réception (16) par l'intermédiaire d'au moins un assemblage à encliquetage (27), il est prévu de préférence que sur la pince (17) est réalisé au moins un élément d'encliquetage (28) élastiquement flexible qui peut s'encliqueter dans un point de fixation prévu de l'élément de réception (16).

7. Ensemble selon l'une quelconque des revendications 1 à 6, **caractérisé en ce que** l'élément de réception (16) est réalisé en matière plastique, il est prévu de préférence que l'élément de réception (16) est réalisé sous la forme d'une pièce d'un seul tenant moulée par injection.

8. Ensemble selon l'une quelconque des revendications 1 à 7, **caractérisé en ce que** la pince (17) est réalisée en matière plastique, il est prévu de préférence que la pince (17) est réalisée sous la forme d'une pièce d'un seul tenant moulée par injection.

9. Tiroir comportant un ensemble selon l'une des revendications 1 à 8.

10. Tiroir selon la revendication 9, **caractérisé en ce que** la paroi arrière (11), la paroi frontale (8) et/ou au moins une paroi latérale (10) comporte un élément de paroi de tiroir (12) réalisé sous la forme d'une pièce rapportée en forme de panneau, de préférence en verre, matière plastique, bois, pierre ou céramique, ladite pièce rapportée en forme de panneau étant reliée par l'intermédiaire du dispositif de liaison (15) à une paroi profilée (11) de préférence en métal ou matière plastique.
